# EUROPÄISCHE PATENTSCHRIFT

(11) **EP 0 928 713 B1**
(45) Veröffentlichungstag und Bekanntmachung des Hinweises auf die Patenterteilung: **26.03.2003**
(21) Anmeldenummer: 98123423.0
(22) Anmeldetag: 09.12.1998
(51) Int. Cl.: B60K 17/16, F16H 57/02, F16H 57/04

(54) **Gehäuse für das Hinterachsgetriebe eines Kraftfahrzeugs**
Housing for a motor vehicle transaxle
Carter de différentiel arrière pour véhicule automobile

(30) Priorität: 09.01.1998 DE 19800571
(43) Veröffentlichungstag der Anmeldung: 14.07.1999
(73) Patentinhaber: Bayerische Motoren Werke Aktiengesellschaft, 80788 München (DE)
(72) Erfinder: Ginglas, Eduard, 86199 Ausburg (DE); Martin, Harry, 82061 Neuried (DE)

(56) Entgegenhaltungen:
- EP-A- 0 543 731
- EP-A- 0 696 688
- DE-A- 3 440 780
- DE-A- 19 624 002
- DE-C- 398 046
- DE-C- 566 489
- DE-C- 691 216
- GB-A- 415 507
- US-A- 2 861 479
- US-A- 5 271 294
- US-A- 5 402 859

## Beschreibung

Die Erfindung betrifft allgemein ein Gehäuse für das Hinterachsgetriebe eines Kraftfahrzeugs mit Lagerungen für das Kegelritzel und das Ausgleichsgetriebe.

Ein derartiges Gehäuse wird üblicherweise aus Grauguss hergestellt. Dieses Gussgehäuse dient einerseits zur Übertragung der Abstützkräfte des Hinterachsgetriebes auf die Karosserie des Kraftfahrzeugs und andererseits zur dichten Kapselung des Hinterachsgetriebes, um das Austreten von Schmieröl bzw. das Eindringen von Fremdkörpern zu verhindern. Ein wesentlicher Nachteil dieses herkömmlichen Graugussgehäuses besteht in dem großen Gewicht. Zur Gewichtsersparnis wurde bereits vorgeschlagen, ein solches Gehäuse aus einer Aluminium- oder Magnesiumlegierung herzustellen. Dieser Werkstoff ist zwar erheblich leichter als Grauguss, es treten aber Probleme hinsichtlich der Schallübertragung und der Steifigkeit auf. Das Hauptproblem besteht aber darin, dass eine Aluminium- oder Magnesiumlegierung einen anderen Wärmeausdehnungskoeffizienten als Stahl hat, was sich auf die Lebensdauer der Verzahnung und auf die Einhaltung einer bestimmten Vorspannung der Lager nachteilhaft auswirkt.

Aus der DE 398 046 C ist auch bereits ein zweiteilig ausgebildetes Gehäuse der im Oberbegriff des Patentanspruchs 1 genannten Bauart bekannt. Bei diesem bekannten Gehäuse besteht der die Lagerungen für das Kegelritzel und das Ausgleichsgehäuse umfassende Tragrahmen aus zwei dreischenkligen Haltekörpern, die an beiden Seiten eines Bügels befestigt sind. Der Bügel hat eine Nabe zur Führung der das Kegelritzel tragenden Antriebswelle. Die Nabe des Bügels ist in einem geteilten hohlen Schaft eines äußeren Gehäuses mit Klemmschrauben befestigt. Das äußere Gehäuse, das den Tragrahmen und ein Ausgleichsgetriebe umfasst, wird durch einen Verschlussdeckel vollständig abgeschlossen. Da der Tragrahmen keine Befestigungspunkte zu seiner Anbindung an die Karosserie eines Kraftfahrzeugs aufweist, müssen die Abstützkräfte des Hinterachsgetriebes von dem äußeren Gehäuse auf die Karosserie des Kraftfahrzeugs übertragen werden. Das äußere Gehäuse muss daher aus einem Material mit hoher mechanischer Festigkeit, wie z. B. Grauguss bestehen. Diese bekannte zweiteilige Ausbildung des Gehäuses für das Hinterachsgetriebe eines Kraftfahrzeugs ist daher ebenfalls mit dem Nachteil eines hohen Gewichts behaftet.

Der Erfindung liegt die Aufgabe zugrunde, ein gattungsgemäßes Gehäuse zu schaffen, das sich bei vergleichbarer mechanischer Festigkeit durch ein geringeres Gewicht auszeichnet.

Ein diesem Erfordernis entsprechendes Gehäuse ist im Patentanspruch 1 angegeben.

Dadurch, dass das Gehäuse entsprechend seinen Funktionen in einen die Abstützung bewirkenden Tragrahmen und eine die Abdichtung bewirkende Hülle unterteilt ist, können diese beiden Teile optimal ausgebildet sein. Das Gehäuse kann daher im Vergleich zu dem bekannten vollständig aus Grauguss bestehenden Gehäuse bei gleicher mechanischer Festigkeit und Steifigkeit gewichtssparender ausgeführt werden.

Der Tragrahmen weist vorzugsweise zusätzliche Befestigungspunkte für Teile des Fahrwerks, beispielsweise die Querlenker, auf.

Bei einem hinsichtlich der Steifigkeit und des Gewichts optimierten skelettartigen Tragrahmen kann der Einbau der innenliegenden Bauteile des Hinterachsgetriebes Schwierigkeiten bereiten. Erfindungsgemäß ist daher vorgesehen, dass der Tragrahmen zur Bildung einer Einbauöffnung in mindestens zwei Einzelteile aufgebrochen wird und die Einzelteile nach erfolgtem Einbau der innenliegenden Bauteile des Hinterachsgetriebes passgenau zusammengefügt und miteinander verschraubt werden. Diese Technik, die auch als "cracken" bezeichnet wird, ist bei der Herstellung des geteilten Kurbelzapfenlagers bei einem Pleuel an sich bekannt. Der Vorteil dieser Technik besteht darin, dass durch das Aufbrechen des Tragrahmens an bestimmten Stellen Bruchflächen entstehen, die ohne weitere Bearbeitung ein passgenaues und formschlüssiges Zusammenfügen der beiden Einzelteile ermöglichen.

Die Hülle des Gehäuses kann mit dem Tragrahmen fest oder lösbar verbunden sein. Damit die Hülle ihre abdichtende Funktion erfüllt, kann sie sowohl von einem den Tragrahmen dicht umschließenden Mantel als auch von einer in den Tragrahmen eingesetzten Innenhülle gebildet sein. Da die Hülle keine statische Funktion hat, braucht ihr Material nicht hinsichtlich der mechanischen Festigkeit ausgewählt zu werden. Die Hülle kann beispielsweise aus einem hoch schalldämmenden Material oder aus einem flexiblen Kunststoffmaterial bestehen.

Drei Ausführungsbeispiele der Erfindung werden nachfolgend anhand der Zeichnungen näher erläutert. Es zeigt:
Fig. 1 eine auseinandergezogene perspektivische Darstellung eines Gehäuses für das Hinterachsgetriebes eines Kraftfahrzeugs,
Fig. 2 eine perspektivische Darstellung einer abgewandelten Ausführungsform eines Tragrahmens gemäß der Erfindung, und
Fig. 3 einen schematischen Längsschnitt durch einen Tragrahmen mit innenliegender Hülle gemäß der Erfindung.

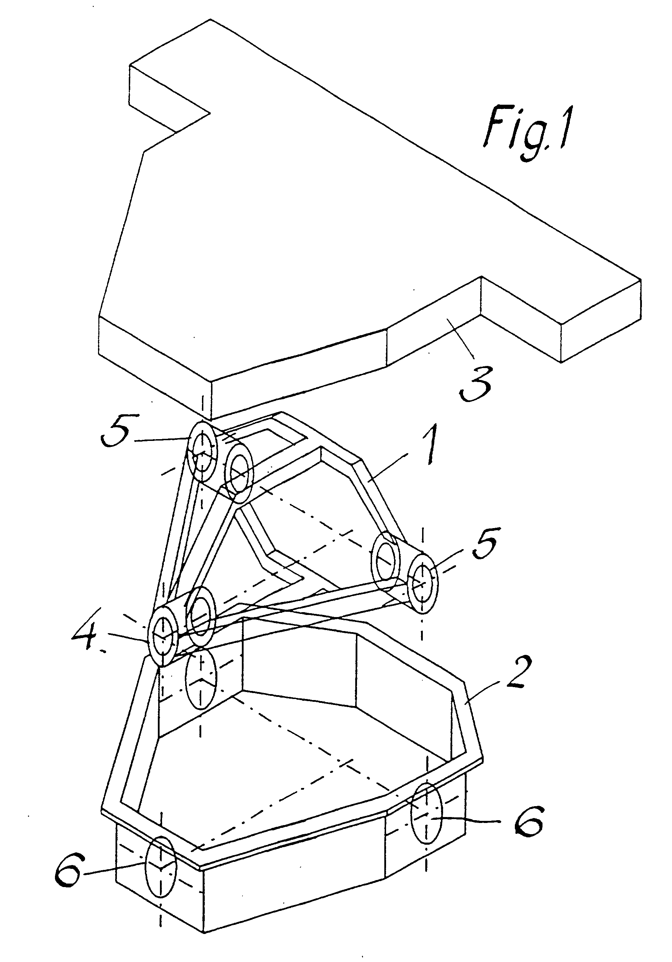

Das in Fig. 1 gezeigte Gehäuse für das Hinterachsgetriebe eines Kraftfahrzeugs besteht aus einem Tragrahmen 1 und aus einem diesen dicht umschließenden Mantel, der von einer Wanne 2 und einem oberen Deckel 3 gebildet ist. Der Tragrahmen 1 besteht aus einem Gitterrahmen, der mit der Lagerung 4 für das (nicht gezeigte) Kegelritzel und mit zwei Lagerungen 5 für das (gleichfalls nicht gezeigten) Ausgleichsgehäuse verbunden ist. Bei dem gezeigten Ausführungsbeispiel sind der Tragrahmen 1 und die Lagerungen 4 und 5 als einteiliges Gußbauteil ausgeführt. Die den Tragrahmen 1 bildenden Streben und die Lagerungen 4 und 5 könnten aber auch einzelne Bauteile sein, die miteinander verschraubt oder verschweißt sind. Die Wanne 2 ist mit Öffnungen 6 zur Aufnahme des Kegelritzels und der Ausgleichswellen versehen. Diesen Öffnungen 6 sind (nicht gezeigte) Dichtungen zugeordnet, die das Austreten von Öl bzw. das Eindringen von Fremdkörpern verhindern.

Bei dem gezeigten Ausführungsbeispiel dient der Deckel 3 zur Übertragung der Abstützkräfte vom Tragrahmen 1 auf die (nicht gezeigte) Karosserie des Kraftfahrzeugs. Zu diesem Zweck ist der Tragrahmen 1 durch (nicht gezeigte) Schrauben mit dem Deckel 3 verbunden, der seinerseits durch (nicht gezeigte) Schrauben mit der Karosserie verbunden ist.

Alternativ könnte der Tragrahmen 1 aber mit durch entsprechende Öffnungen des Deckels 3 hindurchragenden Lageransätzen versehen sein, die unmittelbar mit der Karosserie des Kraftfahrzeugs verbunden sind. Da der Deckel bei dieser Ausführungsform keine Kräfte überträgt, kann er ebenso wie die Wanne aus einem Material mit geringer mechanischer Festigkeit hergestellt sein. Dieses Material kann daher im Hinblick auf das angestrebte geringe Gewicht und/oder im Hinblick auf eine hohe Schalldämmung ausgewählt werden.

Bei einem solchen skelettartigen Tragrahmen kann der Einbau der innenliegenden Bauteile des Hinterachsgetriebes, wie Zahnräder, Lager und Differential, Schwierigkeiten bereiten. In diesem Fall besteht die Möglichkeit, den Tragrahmen zur Bildung einer geeigneten Einbauöffnung in mindestens zwei Einzelteile aufzubrechen. Dabei werden in einer bestimmten Ebene an ausgewählten Stellen des Rahmens Bruchflächen erzeugt. Diese formschlüssigen Bruchflächen ermöglichen es, die Einzelteile des Tragrahmens wieder paßgenau zusammenzufügen. Nach erfolgtem Einbau der innenliegenden Bauteile des Hinterachsgetriebes können die Einzelteile des Tragrahmens ohne weitere Bearbeitung paßgenau zusammengefügt und miteinander verschraubt werden.

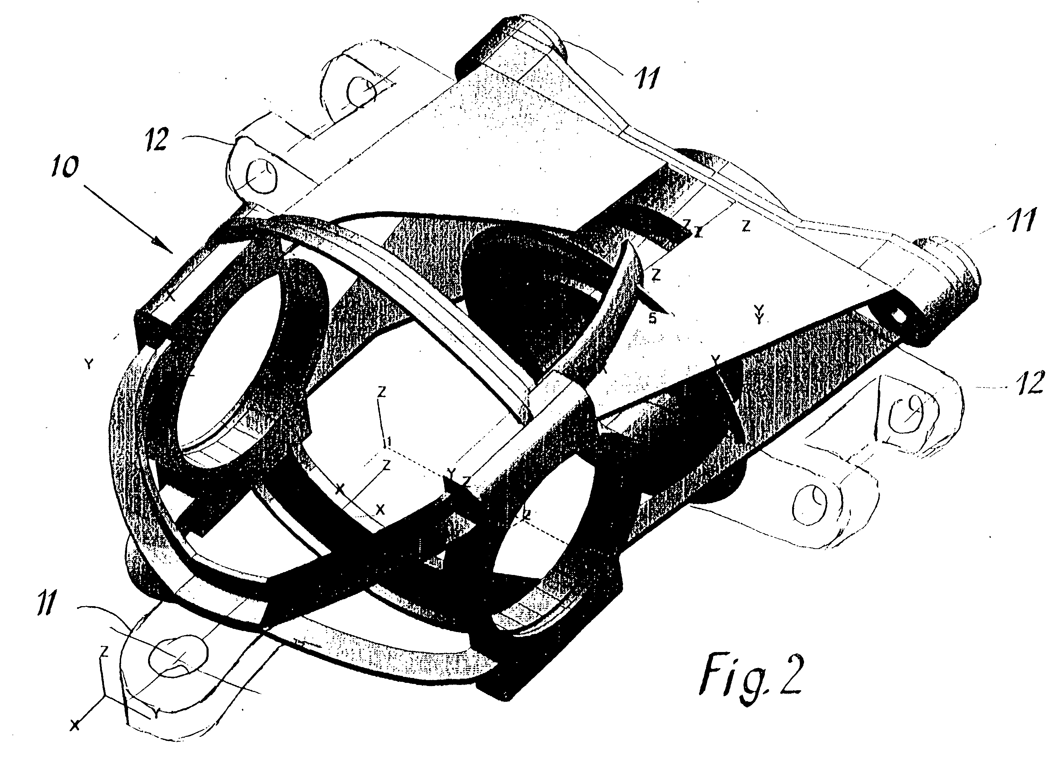

Der in Fig. 2 gezeigte Tragrahmen 10 ist ebenfalls einstückig gegossen. Der wesentliche Unterschied zu der vorstehend beschriebenen Ausführungsform besteht darin, daß der Tragrahmen 10 mit mehreren Angüssen 11 und 12 versehen ist, die als Befestigungspunkte dienen. Genauer gesagt, die drei Angüsse 11 dienen zur Aufhängung des Hinterachsgetriebes an einem Kraftfahrzeug, an dessen Karosserie sie unmittelbar angebunden sind. Die beiden seitlichen Angüsse 12 dienen als Befestigungspunkte für Teile des Fahrwerks, wie zum Beispiel Querlenker. Der Tragrahmen 10 ersetzt somit den üblichen Hinterachsträger. Die Integration der Funktion Hinterachsträger und der Funktion Hinterachsgetriebegehäuse in ein einziges Bauteil ermöglicht eine deutliche Gewichtsersparnis.

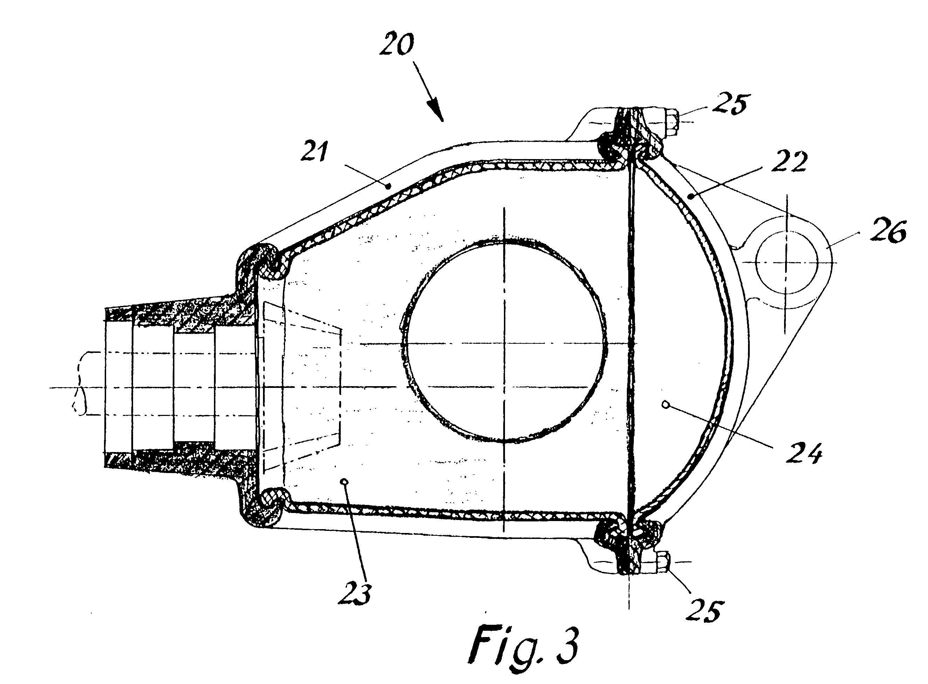

Der in Fig. 3 gezeigte Tragrahmen 20 ist ebenfalls ein skelettartiges Gußbauteil. Im Unterschied zu dem vorstehend beschriebenen einteiligen Tragrahmen 10 ist der Tragrahmen 20 jedoch zweiteilig ausgebildet. Genauer gesagt, der Tragrahmen 20 besteht aus einem Hauptteil 21 und aus einem Deckelteil 22, die mit Schrauben 25 miteinander verbunden sind. Das Deckelteil 22 ist mit einem Anguß 26 zur Anbindung an die Karosserie eines Kraftfahrzeugs versehen. Im Gegensatz zu der in Fig. 1 gezeigten Ausführungsform wird die öldichte Hülle nicht von einem äußeren Mantel, sondern von einer Innenhülle gebildet. Bei dem gezeigten Ausführungsbeispiel besteht die Innenhülle aus zwei Teilen 23 und 24, die in dem Hauptteil 21 und dem Deckelteil 22 angeordnet sind. Als Material für die Innenhülle kommt ein Elastomer oder Kunststoff in Frage. Die Abdichtung zwischen den beiden Teilen 21 und 22 des Tragrahmens und den beiden Teilen 23 und 24 der Innenhülle kann durch geeignet geformte Konturen, zum Beispiel Dichtlippen und/oder durch den Elastomerwerkstoff erfolgen. Durch eine entsprechende Gestaltung der Schnittstellen Tragrahmen-Innenhülle kann die Innenhülle aufgrund ihrer Elastizität formschlüssig in den Tragrahmen eingesetzt werden.

Abweichend von dem gezeigten Ausführungsbeispiel kann das Deckelteil 22 des Tragrahmens auch massiv ausgebildet sein, so daß das Teil 24 der Innenhülle entfallen kann.

### Bezugszeichenliste:

- 1: Tragrahmen
- 2: Wanne
- 3: Deckel
- 4: Lagerung
- 5: Lagerung
- 6: Öffnungen
- 10: Tragrahmen
- 11: Angüsse
- 12: Angüsse
- 20: Tragrahmen
- 21: Hauptteil
- 22: Deckelteil
- 23: Innenhülle
- 24: Innenhülle
- 25: Schrauben
- 26: Anguß

## Patentansprüche

1. Gehäuse für das Hinterachsgetriebes eines Kraftfahrzeugs mit Lagerungen für das Kegelritzel und das Ausgleichsgehäuse, umfassend einen die Lagerungen abstützenden skelettartig aufgebauten Tragrahmen (1) aus Stahl oder Gusseisen und eine mit dem Tragrahmen verbundene öldichte Hülle (2, 3), **dadurch gekennzeichnet, dass** der Tragrahmen (1; 10; 20) Befestigungspunkte (11; 26) zu seiner unmittelbaren Anbindung an die Karosserie eines Kraftfahrzeugs aufweist, und dass die Hülle (2, 3; 23) aus einem Material mit geringer mechanischer Festigkeit besteht.

2. Gehäuse nach Anspruch 1, **dadurch gekennzeichnet, daß** der Tragrahmen (1; 10; 20) ein Gußteil ist.

3. Gehäuse nach Anspruch 1, **dadurch gekennzeichnet, daß** der Tragrahmen (1; 20) aus mehreren Einzelteilen (21, 22) besteht, die miteinander verschweißt oder verschraubt sind.

4. Gehäuse nach einem der Ansprüche 1 bis 3, **dadurch gekennzeichnet, daß** der Tragrahmen (10) zusätzliche Befestigungspunkte (12) für Teile des Fahrwerks aufweist.

5. Gehäuse nach einem der Ansprüche 1 bis 4, **dadurch gekennzeichnet, daß** der Tragrahmen zur Bildung einer Einbauöffnung in mindestens zwei Einzelteile aufgebrochen wird und die Einzelteile nach erfolgtem Einbau der innenliegenden Bauteile des Hinterachsgetriebes paßgenau zusammengefügt und miteinander verschraubt werden.

6. Gehäuse nach einem der Ansprüche 1 bis 5, **dadurch gekennzeichnet, daß** die Hülle (2, 3; 23) mit dem Tragrahmen (1; 10; 20) lösbar verbunden ist.

7. Gehäuse nach Anspruch 6, **dadurch gekennzeichnet, daß** die Hülle (2, 3; 23) aus einem hoch schalldämmenden Material besteht.

8. Gehäuse nach einem Ansprüche 1 bis 7, **dadurch gekennzeichnet, daß** die Hülle mit dem Tragrahmen einstückig verbunden ist.

9. Gehäuse nach einem der Ansprüche 1 bis 8, **dadurch gekennzeichnet, daß** die Hülle ein den Tragrahmen (1) dicht umschließender Mantel (2, 3) ist.

10. Gehäuse nach einem der Ansprüche 1 bis 8, **dadurch gekennzeichnet, daß** die Hülle eine in den Tragrahmen (20) eingesetzte Innenhülle (23) ist.

## Claims

1. A housing for the differential gear of a motor vehicle with bearings for the bevel pinion and the differential gearing, comprising a skeleton-like steel or cast-iron frame (1) for supporting the bearings and an oil-tight jacket (2, 3) connected to the supporting frame, **characterised in that** the supporting frame (1; 10; 20) has fastening points (11; 26) for directly connecting it to the body of a vehicle, and the jacket (2, 3; 23) is made of a material having low mechanical strength.

2. A housing according to claim 1, **characterised in that** the supporting frame (1; 10; 20) is a cast-iron part.

3. A housing according to claim 1, **characterised in that** the frame (1; 20) comprises a number of individual parts (21, 22) which are welded or screwed together.

4. A housing according to any of claims 1 to 3, **characterised in that** the supporting frame (10) has additional fastening points (12) for parts of the running gear.

5. A housing according to any of claims 1 to 4, **characterised in that** the frame is divided into at least two individual parts so as to form an installation opening, and after installation of the inner components of the differential gear, the individual parts are fitted together with an exact fit and screwed.

6. A housing according to any of claims 1 to 5, **characterised in that** the jacket (2, 3; 23) is releasably connected to the supporting frame (1; 10; 20).

7. A housing according to claim 6, **characterised in that** the jacket (2, 3; 23) is made of a highly sound-absorbing material.

8. A housing according to any of claims 1 to 7, **characterised in that** the jacket is in one piece with the supporting frame.

9. A housing according to an of claims 1 to 8, **characterised in that** the jacket is a casing (2, 3) tightly surrounding the supporting frame (1).

10. A housing according to any of claims 1 to 8, **characterised in that** the jacket is an inner jacket (23) inserted into the supporting frame (20).

## Revendications

1. Carter de différentiel d'essieu arrière de véhicule comportant des paliers pour le pignon conique et le carter de différentiel, comprenant un cadre de support (1) à construction en squelette supportant les paliers, ce cadre étant en acier ou en fonte de fer, et une enveloppe étanche à l'huile (2, 3) reliée au cadre de support,
**caractérisé en ce que**
le cadre de support (1; 10 ; 20) comporte des points de fixation (11; 26) pour être relié directement à la carrosserie d'un véhicule, et
l'enveloppe (2, 3 ; 23) est en une matière à faible résistance mécanique.

2. Carter selon la revendication 1,
**caractérisé en ce que**
le cadre de support (1 ; 10 ; 20) est une pièce en fonte.

3. Carter selon la revendication 1,
**caractérisé en ce que**
le cadre de support (1, 20) est formé de plusieurs parties séparées (21, 22) soudées ou vissées les unes aux autres.

4. Carter selon l'une quelconque des revendications 1 à 3,
**caractérisé en ce que**
le cadre de support (10) comporte des points de fixation supplémentaires (12) pour des parties du châssis.

5. Carter selon l'une quelconque des revendications 1 à 4,
**caractérisé en ce que**
le cadre de support est rompu en au moins deux parties séparées pour former une ouverture de montage, et les parties séparées sont assemblées de manière ajustée une fois le montage des composants intérieurs du différentiel d'essieu arrière réalisé et ces parties sont vissées les unes aux autres.

6. Carter selon l'une quelconque des revendications 1 à 5,
**caractérisé en ce que**
l'enveloppe (2, 3 ; 23) est reliée de manière amovible au cadre de support (1 ; 10 ; 20).

7. Carter selon la revendication 6,
**caractérisé en ce que**
l'enveloppe (2, 3 ; 23) est en une matière à forte isolation phonique.

8. Carter selon l'une quelconque des revendications 1 à 7,
**caractérisé en ce que**
l'enveloppe est réalisée en une seule pièce avec le cadre de support.

9. Carter selon l'une quelconque des revendications 1 à 8,
**caractérisé en ce que**
l'enveloppe est une enveloppe (2, 3) entourant de manière étanche le cadre de support (1).

10. Carter selon l'une quelconque des revendications 1 à 8,
**caractérisé en ce que**
l'enveloppe est une enveloppe intérieure (23) placée dans le cadre support (20).
